(19) **Europäisches Patentamt / European Patent Office / Office européen des brevets**

(11) **EP 1 759 832 A1**

(12) **EUROPEAN PATENT APPLICATION**

(43) Date of publication:
**07.03.2007 Bulletin 2007/10**

(51) Int Cl.:
*B32B 17/10* (2006.01)    *C03C 27/12* (2006.01)
*C08L 23/08* (2006.01)    *C08F 8/44* (2006.01)

(21) Application number: **06021206.5**

(22) Date of filing: **12.05.1999**

(84) Designated Contracting States:
**DE FR GB**

(30) Priority: **14.05.1998 US 78984**

(62) Document number(s) of the earlier application(s) in accordance with Art. 76 EPC:
**99921902.5 / 1 105 287**

(71) Applicant: **E.I. du Pont de Nemours and Company Wilmington, DE 19898 (US)**

(72) Inventors:
 • **Bennison, Stephen John**
 **Wilmington**
 **Delaware 19803 (US)**
 • **Hofmann, George Henry**
 **Wilmington**
 **Delaware 19809 (US)**

 • **Jagota, Anand**
 **Wilmington**
 **Delaware 19809 (US)**
 • **Smith, Charles Anthony**
 **Vienna**
 **West Virginia 26105 (US)**
 • **Wong, Bert**
 **Marietta**
 **Ohio 45750 (US)**

(74) Representative: **Gritschneder, Martin et al**
 **Abitz & Partner**
 **Patentanwälte**
 **Postfach 86 01 09**
 **81628 München (DE)**

Remarks:
 This application was filed on 10 - 10 - 2006 as a divisional application to the application mentioned under INID code 62.

(54) **Glass laminates for threat resistant window systems**

(57) This invention comprises a transparent laminate having at least one layer of glass and having self-adhered directly to the layer of glass a thermoplastic polymer layer having low haze and the laminate is capable of sustaining repeated or prolonged stress after breakage of the glass layer while maintaining the structural integrity of the laminate. Preferably, this invention is directed to a transparent laminate of two layers of glass laminated together with a thermoplastic polymer interlayer adhered directly to the glass; wherein the interlayer preferably is an ionomer resin and has Storage Young's Modulus of 50-1,000 MPa (mega Pascals) at 0.3 Hz and 25 DEG C determined according to ASTM D 5026-95a, a Minimum Tear Energy of at least 15 MJ/m$^3$ (mega joules per cubic meter) determined from tensile tests carried out according to ASTM 638-89 at 25 DEG C and adhesion to glass of 5-42 MPa determined according to compressive Shear Strength Test determined at 25 DEG C and preferably, the interlayer of the laminate is a sheet of an ionomer resin; wherein the ionomer resin of a water insoluble salt of a polymer of ethylene and methacrylic acid or acrylic acid containing about 14-24 % by weight of the acid and about 76-86 % by weight of ethylene and having about 10-80 % of the acid neutralized with a metallic ion, and has a melt index of about 0.5-50. The invention also includes other laminate structures such as multiple layers of glass with thermoplastic polymer interlayers, glass/ thermoplastic resin laminate incorporating a transparent durable layer and/or a coating and a process for making the laminate structure.

**(Cont. next page)**

EP 1 759 832 A1

FIG.1

**Description**

## BACKGROUND OF THE INVENTION

Field of the Invention

This invention is related to glass laminates and in particular to a glass laminate wherein the glass layers are laminated together with a thermoplastic polymer interlayer to provide a laminate that retains stiffness and load bearing capacity after there has been glass breakage; the interlayer used in the laminate has good glass cut-through resistance, and the laminate has excellent impact resistance and good visual properties.

Description of the Prior Art

Polyvinylbutyral (PVB) has been and is widely used as an interlayer to form glass laminates used in automobiles and for architectural applications such as exterior windows, interior windows or dividers and the like. PVB has low stiffness and deforms readily upon impact which is an excellent property for automotive windshields where human impact is involved and reduction in injuries is desired. But these properties limit performance when the laminate must provide intrusion resistance after the glass of the laminate has broken; for example, when a glass laminate is subjected to high wind forces and impacts of flying debris as occur in a hurricane or where there are repeated impacts on a window by a criminal attempting to break into a vehicle or structure. Laminates eventually fail due to the large deformation of the polymer interlayer which can cause the laminate to pull out of the window frame and due to the action of shards of broken glass which eventually cut into the PVB layer and allow the laminate to be penetrated by wind, debris or the instrument used by a criminal attempting to break the laminate. The use of thicker layers of PVB to gain more stiffness and cut-through resistance is impractical due to cost and the excessive thickness of the interlayer required.

A wide variety of glass laminates formed with PVB are know as shown in Phillips U.S. Patent 4,297,262 issued October 27, 1981, Phillips U.S. Patent 4,230,771 issued October 28,1980 and British Patent 828,381 published Feb. 17, 1960. These patents are directed to forming glass laminates useful for automobile and truck windshields. Upon breakage of the glass of the laminate, they are relatively soft, elastic and highly extensible such that if a human skull hits the laminate in an accident, it is decelerated without causing a concussion. These are not the properties required for architectural windows exposed to hurricane and other high stresses and side windows for automobiles and trucks that may be subjected to criminal actions.

Glass laminates have been made using interlayers other than PVB, such as polyurethanes and thermoplastic copolymers and these in combination with polyester film and polycarbonate films. Bolton et al U.S. Patent 4,663,228 issued May 5, 1987 shows the use of an ionomer resin to form glass laminates. However, the ionomer resins taught therein without further modification are too hazy to be used in windows and require surface treatment to promote adhesion to glass. To improve these optical properties, organic amines must be added to the resin during the process of extruding a sheet of the resin that is used to form the laminate and color reducing agents are added to reduce the color. The use of organic amines causes a number of problems such as air pollution from vaporization of amine as it is added to the extruder, covalent crosslinking in the polymer and formation of gel and gel particles in the extruded sheet.

There is an increased demand for glass laminates used as architectural windows that are resistant to the threats of wind storms and hurricanes particularly in coastal areas as well as a wide demand for side windows for vehicles that are intrusion resistant. These glass laminates are required to have improved toughness and durability, must be easily fabricated and have good optical properties. This invention provides such a product and preferably utilizes an unmodified ionomer resin sheet.

## SUMMARY OF THE INVENTION

This invention comprises a transparent laminate having at least one layer of glass and a thermoplastic polymer self-adhered directly to the glass having low haze and the laminate is capable of sustaining repeated or prolonged stress after the breakage of the glass layer while maintaining the structural integrity of the laminate.

Preferably, this invention is directed to a transparent laminate of two layers of glass laminated together with a thermoplastic polymer interlayer self-adhered directly to glass; wherein the interlayer preferably is an ionomer resin and has Storage Young's Modulus of 50-1,000 MPa (mega Pascals) at 0.3 Hz and 25 °C determined according to ASTM D 5026-95a, a Minimum Tear Energy of at least 15 MJ/m$^3$ (mega joules per cubic meter) determined from tensile tests carried out according to ASTM 638-89 at 25 °C and adhesion to glass of 5-42 MPa determined according to Compressive Shear Strength Test determined at 25°C.

Preferably, the interlayer of the laminate is a sheet of an ionomer resin; wherein the ionomer resin is of a water insoluble salt of a polymer of ethylene and methacrylic acid or acrylic acid containing about 14-24% by weight of the acid and about 76-86% by weight of ethylene and having about 10-80% of the acid neutralized with a metallic ion, preferably a sodium ion, and the ionomer has a melt index of about 0.5-50. Melt index is determined at 190 °C according to ASTMD1238.

The invention also includes other laminate structures such as multiple layers of glass with thermoplastic polymer interlayers, glass/thermoplastic resin laminate incorporating a transparent durable layer and/or a coating and a process for making the laminate structure.

## BRIEF DESCRIPTION OF THE DRAWING

FIGURE 1 shows a laminate comprising glass, a thermoplastic interlayer and glass.
FIGURE 2 shows a laminate comprising glass, an ionomer resin and a durable transparent plastic layer or coating.
FIGURE 3 shows a jig used for measuring the adhesion of the interlayer to glass of the laminate.

## DETAILED DESCRIPTION

The transparent glass laminate of this invention is a laminate of at least one layer of glass and thermoplastic polymer layer self-adhered directly to glass which has a high modulus, excellent tear strength and excellent adhesion directly to glass and preferably the thermoplastic polymer layer is a particular ionomer resin. The laminate has excellent impact resistance, toughness and glass cut-through resistance and durability which makes it particularly useful for architectural uses in buildings subjected to hurricanes and wind storms and also as side windows for automobiles and trucks that can be subjected to the repeated attacks by a person attempting to break into the vehicle. The laminate also has a low haze and excellent transparency. These properties make it useful as architectural glass which can be used for solar reduction, sound control, safety and security.

One preferred laminate of this invention is a transparent laminate of two layers of glass laminated together with a thermoplastic polymer interlayer self-adhered directly to the glass; wherein the interlayer preferably is an ionomer resin and has Storage Young's Modulus of 50-1,000 MPa (mega Pascals) at 0.3 Hz and 25 °C determined according to ASTM D 5026-95a, a Minimum Tear Energy of at least 15 MJ/m$^3$ (mega joules per cubic meter) determined from tensile tests carried out according to ASTM 638-89 at 25 °C and adhesion to glass of 5-42 MPa determined according to Compressive Shear Strength Test at 25°C.

Preferably, the laminate is made with an ionomer resin interlayer which has a haze of less than 5% and a transparency of at least 90%. Amines and other modifiers are not used in forming a sheet of ionomer resin used in the laminate thereby eliminating the aforementioned problems caused by their use.

As used herein, when the thermoplastic polymer layer is said to be self-adhered directly to glass, this means that there is no intermediate layer such as a primer or thin adhesive layer between the glass and the thermoplastic polymer layer nor has the surface of the glass or thermoplastic layer been specially treated

The preferred interlayer of the laminate is a sheet of an ionomer resin. The ionomer resin is a water insoluble metallic salt of a polymer of ethylene and methacrylic acid or acrylic acid containing about 14-24% by weight of the acid and about 76-86% by weight of ethylene and having about 10-80% of the acid neutralized with metallic ion and the ionomer resin has a melt index of about 0.5-50. The acid content, the acid neutralization level and the neutralizing agent used all must be balanced to provide the ionomer resin with acceptable optical properties. The preparation of ionomer resins is disclosed in Rees US Patent 3,404,134 issued October 1, 1968.

Examples of ionomer resins that can be used to form the laminate of this invention comprise a water insoluble salt of a polymer of 80-82% by weight ethylene and 18-20% by weight of methacrylic acid or acrylic acid having about 30-50% by weight of the acid is neutralized with sodium ion and the resin has a melt index of 0.5-5. Another resin comprises a water insoluble salt of a polymer of 83-86% by weight ethylene and 14-17% by weight of methacrylic acid or acrylic acid having about 60-70% by weight of the acid is neutralized with sodium ion and the resin has a melt index of 0.5-5.

Additional examples of resins that have been found useful are as follows:

an ionomer resin comprising a polymer of 80-82% by weight ethylene and 18-20% by weight of methacrylic acid, 35-40% of the acid is neutralized with sodium ion and the ionomer resin has a melt index of 1-3;
an ionomer resin comprising a polymer of 81% ethylene and 19% methacrylic acid and 37% of the acid is neutralized with a sodium ion and the ionomer resin has a melt index of 1-3.
an ionomer resin comprising a polymer of 84-86% by weight ethylene and 14-16% by weight of methacrylic acid, 60-70% of the acid is neutralized with sodium ion and the ionomer resin has a melt index of 1-3; and
an ionomer resin comprising a polymer of 85% ethylene and 15% methacrylic acid and 62% of the acid is neutralized with a sodium ion and the ionomer resin has a melt index of 1-3.

Standard techniques are used to form the resin interlayer sheet such as compression molding, injection molding, extrusion and calendering. Preferably, conventional extrusion techniques are used. It is possible to use recycled ionomer resin with virgin ionomer resin to form the interlayer sheet. The ionomer resin plus any additives such a colorants, antioxidants and UV stabilizers are charged into a conventional extruder and melt blended and passed through a cartridge type melt filter for contamination removal and extruded through a die and pulled through calender rolls to form sheet about 0.38-4.6 mm thick.

Typical colorants that can be used in the ionomer resin sheet are, for example, a bluing agent to reduce yellowing or a whitening agent or a colorant can be added to color the glass or to control solar light.

The ionomer resin sheet after extrusion can have a smooth surface but preferably has a roughened surface to effectively allow most of the air to be removed from between the surfaces in the laminate during the lamination process. This can be accomplished for example, by mechanically embossing after extrusion or by melt fracture during extrusion of the sheet and the like.

The laminate is formed by conventional processes known in the art. In a typical process, a glass sheet, an ionomer resin sheet and a second glass sheet are laminated together under heat and pressure and a vacuum [27-28 inches (689-711mm) Hg] to remove air. In a typical procedure, an ionomer resin sheet is positioned between two glass plates and under a vacuum (a vacuum bag or vacuum ring can be used) are heated from about 25 to 135°C and then held at this temperature for about 15 minutes to 2.0 hours and then cooled to 25°C.

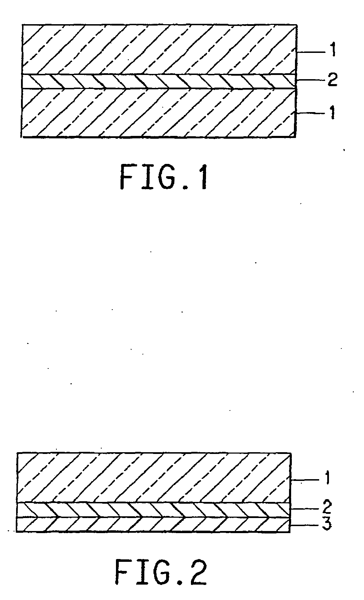

The Figures show typical laminates of this invention. Figure 1 shows a typical glass laminate used for windows that are storm and debris resistant of two glass layers 1 having laminated between them an ionomer resin sheet 2. Figure 2 shows a laminate of a glass layer 1 having an ionomer resin sheet 2 adhered to a durable transparent plastic layer 3. Any of the above laminates can be coated with conventional abrasion resistant coatings that are known in the art.

For architectural uses and for uses in transportation applications such as automobiles, trucks and trains, the laminate has two layers of glass and directly self-adhered to the glass is an interlayer of a thermoplastic polymer and the laminate has an overall thickness of about 3-30 mm. The interlayer has a thickness of about 0.38-4.6 mm and each glass layer usually is at least 1 mm thick. The interlayer is adhered directly to the glass and an intermediate adhesive layer or coating between the glass and the interlayer is not used. Obviously, other laminate constructions can be used such as multiple layers of glass and thermoplastic interlayers or a single layer of glass with a thermoplastic polymer interlayer and having adhered to the interlayer a layer of a durable transparent plastic film.

The interlayer has a Storage Young's Modulus of 50-1,000 MPa (mega Pascals) and preferably about 100-500 MPa and is measured at 0.3 Hz and 25 °C by dynamic mechanical analysis in tension at a frequency of 0.3 Hz and a maximum strain of 10% according to ASTM D 5026-95a. The interlayer remains in the 50-1,000 MPa range of its Storage Young's Modulus at temperatures up to 40°C.

The Minimum Tear Energy of the interlayer is at least 15 MJ/m$^3$ (mega Joules per cubic meter) and preferably about 30-130 MJ/m$^3$. Tear energy is determined from the results of a standard tensile test measured at 25 °C carried out in accordance with ASTM D 638-89. A specimen type IV, as specified in the test, is pulled at 2.0 inches/minute (50.8 mm/min). Tensile stress (nominal), $\sigma$, is defined as the tensile load per unit area of minimum original cross section. Strain, $\varepsilon$, is defined as the ratio of the elongation to the gage length of the test specimen. The tensile stress-strain curve is defined as a diagram in which values of tensile stress are plotted as ordinates against corresponding values of tensile strains as abscissas. Tear energy, U, is the area under this curve up to the elongation, or strain $\varepsilon_{max}$, at break. This can be expressed mathematically as:

$$U = \int_0^{\varepsilon max} \sigma d\varepsilon.$$

and is a quantity with units of energy per unit volume (Joules/cubic meters) of the undeformed polymer.

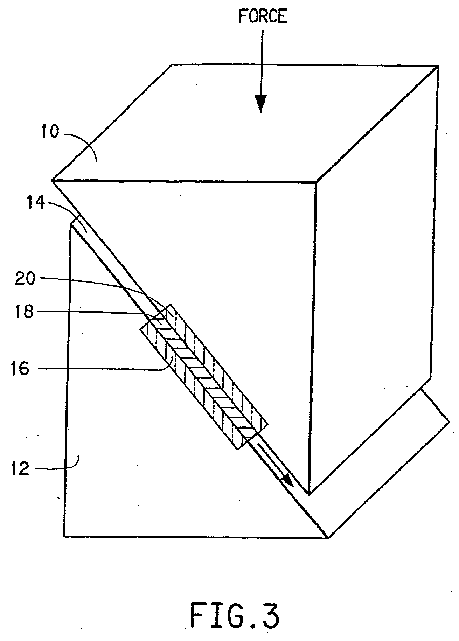

Adhesion of the laminate, i.e. of the interlayer to glass, is determined using the compressive shear strength test using the jig 10,12 shown in the FIGURE 3. In preparing laminates for adhesion determination, the interlayer is placed between two pieces of annealed float glass of dimension 12"x12" (305 mm x 305 mm) and 2.5 mm nominal thickness which have been washed and rinsed in demineralized water. The glass/interlayer/glass assembly is then heated in an oven set at 90-100°C for 30 minutes. Thereafter, it is passed through a set of nip rolls so that most of the air in the void spaces between the glass and the interlayer may be squeezed out, and the edge of the assembly sealed. The assembly at this stage is called a pre-press. The pre-press is then placed in an air autoclave where the temperature is raised to 135 °C and pressure to 200 psig (14.3 bar). These conditions are maintained for 20 minutes, after which, the air is cooled , while no more air is added to the autoclave. After 20 minutes of cooling when the air temperature in the autoclave is under 50 °C, the excess air pressure is vented.

The compressive shear strength of the laminate prepared as prescribed above is determined at 25 °C using the method detailed herein. Six 1"x1" (25 mm x25 mm) chips are sawed from the laminate. The compressive shear strength of the chip is determined using the jig shown in the FIGURE 3. The chip of glass layers 16, and 20 and an interlayer 18 is placed on the cut-out on the lower half of the jig 12, and the upper half 10 is then placed on top of the chip. A cross-head is lowered at the rate of 0. 1 inch per minute (2.5 mm per minute) until it contacts the upper piece of the device. As the cross-head continues to travel downward, one piece of the chip begins to slides relative to the other. The compressive shear strength of the chip is the shear stress required to cause adhesive failure. The precision of this test is such that one standard deviation is typically 6% of the average result of six chips. An interlayer tested in this way for adhesion which has compressive shear strength of 5-42 MPa which is considered suitable for use in hurricane and storm resistant windows and for transportation use such as for automobile and truck side-glass windows and backlites and for windows in trains.

For architectural uses in coastal areas, the laminate of glass/interlayer/glass must pass a simulated hurricane impact and cycling test which measures the resistance of a laminate to debris impact and wind pressure cycling. A currently acceptable test is performed in accordance to the South Florida Building Code Chapter 23, section 2315 Impact tests for wind born debris: fatigue load testing is determined according to Table 23-F of section 2314.5, dated 1994. This test simulates the forces of the wind plus air born debris impacts during severe weather, e.g., a hurricane. A sample 35 inches x 50 inches (88.9x127 cm) of the laminate is tested. The test consists of two impacts on the laminate (one in the center of the laminate sample followed by a second impact in the corner of the laminate). The impacts are done by launching a 9 pound (4.1 kilograms) board nominally 2 inches (5 cm) by 4 inches (10 cm) and 8 feet (2.43 meters) long at 50 feet/second (15.2 meters/second) from an air pressure cannon. If the laminate survives the above impact sequence, it is subjected to an air pressure cycling test. In this test, the laminate is securely fastened to a chamber. In the positive pressure test, the laminate with the impact side outward is fastened to the chamber and a vacuum is applied to the chamber and then varied to correspond with the cycling sequences set forth in the following Table I. The pressure cycling schedule, as shown in Table I below, is specified as fraction of a maximum pressure P. In this test P equals 70 pounds per square foot (3360 Pascals) Each cycle of the first 3500 cycles and subsequent cycles is completed in about 1-3 seconds. On completion of the positive pressure test sequence, the laminate is reversed with the impact side facing inward to the chamber for the negative pressure portion of the test and a vacuum is applied corresponding to the following cycling sequence. The values are expressed as negative values (-).

**TABLE I**

| Number of Air Pressure Cycles | Pressure Schedule[absolute pressure level where P is 70 pounds per square foot (3360 Pascals)] | Pressure Range [pounds per square foot (Pascals)] |
|---|---|---|
| Positive pressure (inward acting) | | |
| 3,500 | 0.2 P to 0.5 P | 14 to 35 (672-1680 Pascals) |
| 300 | 0.0 P to 0.6P | 0 to 42 (0-2016 Pascals) |
| 600 | 0.5 P to 0.8 P | 35 to 56 (1680-2688 Pascals) |
| 100 | 0.3 P to 1.0 P | 21 to 70 (1008-3360 Pascals) |
| Negative Pressure (outward acting) | | |
| 50 | -0.3 P to -1.0 P | -21 to -70 (-1008 to -3360 Pascals) |
| 1,060 | -0.5 P to -0.8 P | -35 to -56 (-1680 to -2688 Pascals) |
| 50 | 0.0 P to -0.6 P | -0 to -42 (0 to -2016 Pascals) |
| 3,350 | -0.2 P to -0.5 P | -14 to -35 (-672 to -1680 Pascals) |

A laminate passes the impact and cycling test when there are no tears or openings over 5 inches (12.7 cm) in length and not greater than 1/16 inch (0.16cm) in width.

The haze and transparency of laminates of this invention are measured according to ASTM D-1003-61 by using a Hazegard XL211 hazemeter or Hazegard Plus hazemeter (BYK Gardner-USA). Percent-haze is the diffusive light transmission as a percent of the total light transmission. To be considered suitable for architectural and transportation uses, the interlayer of the laminate generally is required to have a transparency of at least 90 and a haze of less than 5%.

The following examples in which parts and percentages are by weight unless otherwise specified further illustrate this invention.

EXAMPLE 1

Six separate glass laminates were prepared. Laminates 1-3 used a 90 mil (2.3 mm) thick interlayer of an ionomer resin composed of 81% ethylene, 19% methacrylic acid, 37% neutralized with sodium ion and having a melt index of 2 and 2 layers of glass, each 3 mm in thickness. The ionomer resin is available as "Surlyn" ionomer resin made by E. I. duPont de Nemours and Company.

The ionomer resin interlayer has a Storage Young's Modulus of 361 MPa, a Tear Energy of 101 MJ/m$^3$ and an adhesion to glass of 24 MPa, all measured at 25°C.

Laminates 4-6 used a 90 mil (2.3 mm) thick interlayer of Butacite ® polyvinyl butyral PVB resin sheeting interlayer from E.I. duPont de Nemours and Company and 2 layers of glass, each 3 mm in thickness.

The PVB resin has a Storage Young's Modulus of 25 MPa, a Tear Energy of 30 MJ/m$^3$ and an adhesion to glass of 21 MPa, all measured at 25°C.

All six laminates were prepared by placing the interlayer between the glass panels. Each of the glass panels was washed with deionized water. The laminates were placed in an air autoclave at 220 PSIG (1.6 MPa) pressure at 135 °C for 30 minutes. The laminates were 35 inches (88.9 cm) high by 50 inches (127 cm) wide. All six of the laminates were each placed into a window frame using the same procedure using RTV silicone (DC 995) on the inside lip of the frame (edge bite /overlap of 0.75 inches (1.9 cm).

Each of the laminates was tested according to the Florida impact and cycling test sequence. In the impact test a missile of a 9 pound (4.1 kilograms) pine board nominally 2 inches (5cm) by 4 inches (10 cm) and 8 feet (2.43 meters) long is propelled against the laminate at 50 feet/second (15.2 meters/second) from an air pressure cannon striking the laminate "normal" to its surface. Each of the laminates is subjected to two impacts in two different locations of the laminate which fractures the glass. The results of the test are shown below in Table A below.

TABLE A

| Laminates of Ionomer Resin (Invention) | IMPACT SEQUENCE | | | | | |
|---|---|---|---|---|---|---|
| | #1 IMPACT | | | #2 IMPACT | | |
| | Location | Speed fps (mps) | Result | Location | Speed (fps) (mps) | Result |
| 1 | Bottom Center | 50.8 (15.5) | Passed | Bottom Corner | 49.9 (15.2) | Passed |
| 2 | Center Mullion | 50.7 (15.5) | Passed | Bottom Corner | 50.8 (15.5) | Passed |
| 3 | Center Mullion | 49.9 (15.2) | Passed | Bottom Center | 50.8 (15.5) | Passed |
| Laminate of PVB | | | | | | |
| 4 | Bottom Center | 50.6 (15.4) | Passed | Bottom Corner | 51.0 (15.6) | Passed |
| 5 | Center Mullion | 50.2 (15,3) | Passed | Bottom Corner | 50.4 (15.4) | Passed |
| 6 | Center Mullion | 50.3 (15.3) | Passed | Bottom Center | 50.1 (15,3) | Passed |
| fps = feet per second mps = meters per second | | | | | | |

Each of the laminates 1-6 passed the impact test. The glass was fractured but the laminate remained intact.

To evaluate the post glass fracture intrusion resistance of each of the laminates, each of the laminates 1-6 after the impact test was subjected to an air pressure cycling test as described above in the specification except the air pressure cycling sequence as shown in Table B was used. The results of this test are shown below in Table B below.

EP 1 759 832 A1

Table B

| Laminate of Ionomer Resin (Invention) | AIR-PRESSURE CYCLING SEQUENCE | | | | | |
|---|---|---|---|---|---|---|
| | POSITIVE PRESSURE INWARD ACTING | | | NEGATIVE PRESSURE OUTWARD ACTING | | |
| | Pressure (Pounds per Square Foot) | Cycles | Result | Pressure (Pounds per Square Foot) | Cycles | Result |
| 1 | 70 (3360 Pascals) | 4500 | Passed | 70 (3360 Pascals) | 4500 | Passed |
| 2 | 70 | 4500 | Passed | 70 | 4500 | Passed |
| 3 | 70 | 4500 | Passed | 70 | 4500 | Passed |
| Laminates of PVB | | | | | | |
| 4 | 70 | 4500 | Passed | 70 | 1000 | Failed |
| 5 | 70 | 4500 | Passed | 70 | 4500 | Failed |
| 6 | 70 | 4500 | Failed | 70 | 300 | Failed |

The test shows that laminates 4-6 prepared with a PVB (polyvinyl butyral) interlayer failed. Laminates 1-3 prepared with a ionomer resin interlayer (the invention) passed the cycling test and were subjected to an additional cycling sequence using higher pressures from 85-130 pounds per square foot (4080-6240 Pascals) which is beyond the pressure required by the Hurricane Impact and Cycling Resistance Test. The results of this test are shown in Table C below.

TABLE C

| Laminate of Ionomer Resin (Invention) | AIR-PRESSURE CYCLING SEQUENCE | | |
|---|---|---|---|
| | NEGATIVE PRESSURE OUTWARD ACTING | | |
| | Pressure (pounds per Square Foot) | Cycles | Result |
| 1 | 85 (4080 Pascals) | 100 | Passed |
| | 100 (4800 Pascals) | 100 | Test Suspended* |
| 2 | 85 (4080 Pascals) | 100 | Passed |
| | 100 (4800 Pascals) | 100 | Passed |
| | 120 (5160 Pascals) | 100 | Passed |
| | 130 (6240 Pascals) | 95 | Test Suspended* |
| 3 | 85 (4080 Pascals) | 100 | Passed |
| | 100 (4800 Pascals) | 100 | Passed |
| | 120 (5160 Pascals) | 100 | Passed |
| | 130 (6240 Pascals) | 95 | Passed |
| *Test was terminated because of failure of window support structure. | | | |

Laminate 3 was still acceptable and was subjected to additional testing as shown in Table D below.

TABLE D

| Laminate of Ionomer Resin (Invention) | AIR-PRESSURE CYCLING SEQUENCE | | |
|---|---|---|---|
| | POSITIVE PRESSURE INWARD ACTING | | |
| | Pressure (Pounds per Square Foot) | Cycles | Result |
| 3 | 100 (4800 Pascals) | 130 | Passed |

(continued)

|  | Pressure (Pounds per Square Foot) | Cycles | Result |
|---|---|---|---|
|  | 120 (5760 Pascals) | 100 | Passed |
|  | 130 (6240 Pascals) | 100 | Passed |
|  | 140 (6720 Pascals) | 100 | Passed |
|  | 150 (7200 Pascals) | 130 | Test Suspended* |
| *Test was terminated because of failure of window support structure. | | | |

The above tests clearly show that laminates made according to the invention using an ionomer resin interlayer have significantly better impact and air pressure cycle properties in comparison to laminates formed with a conventional PVB interlayer.

Example 2

A laminate 7 was prepared according to the procedure of Example 1 using a 6 mm thick interlayer of an ionomer resin composed of 81 % ethylene, 19% methacrylic acid, 37% neutralized with sodium ion and having a melt index of 2.0 and 2 layers of glass each 3 mm in thickness.

A laminate 8 was prepared according to the procedure of Example 1 using a 6 mm thick interlayer of an ionomer resin composed of 85% ethylene, 15% methacrylic acid, 59% neutralized with sodium ion and having a melt index of 0.9 and containing an organic amine to form an interlayer sheet as taught in Bolton et al U.S. Patent 4,663,228 and 2 layers of glass each 3 mm in thickness.

The haze of each of these laminates was measured over a series of temperatures. The temperature of each laminate was raised over a 20 minute period to a given temperature and the haze of the laminate was measured. The results are shown in the following Table E.

TABLE E

| Temperature (°C) | Haze Laminate 7 (Invention) | Haze Laminate 8 Ionomer Resin Treated with Amine |
|---|---|---|
| 30 | 3.3 | 6.1 |
| 37 | 3.3 | 6.1 |
| 45 | 3.4 | 6.3 |
| 52 | 3.5 | 6.6 |
| 60 | 3.7 | 6.9 |
| 67 | 3.3 | 7.3 |
| 75 | 2.6 | 9 |

Laminate 7 (the invention) made with the ionomer resin of the invention which did not contain an organic amine had less haze over the temperature range of 30-75°C in comparison to Laminate 8 made with an ionomer resin which contained an organic amine. Laminate 8 had a haze level of greater than 5% over the entire 30-75 °C temperature range which is not acceptable.

Example 3

Laminated glass samples were prepared by sandwiching the interlayer between two pieces of annealed float glass with a dimension of 12" x 12" (305 mm x 305 mm) and 2.5 mm nominal thickness which have been washed and rinsed in demineralized water. The glass/interlayer/glass assembly is then heated in an oven set at 90-100°C for 30 minutes. Thereafter, it is passed through a set of nip rolls so that the air in the void spaces between the glass and the interlayer is squeezed out, and the edge of the assembly sealed. The assembly at this stage is called a pre-press. The pre-press is then placed in an air autoclave where the temperature is raised to 135°C and pressure to 200 psig (14.3 bar). These conditions are maintained for 20 minutes, after which the air is cooled, and no additional air is added to the autoclave. After 20 minutes of cooling when the air temperature in the autoclave is under 50°C, the excess air pressure is vented. The laminates are then removed from the autoclave.

Specifically, twenty laminates were prepared using plasticized polyvinyl butyral resin sheeting interlayer (available commercially from DuPont under the tradename of BUTACTTE®) and twenty laminates were prepared using ionomer resin interlayer described in Example 1. The interlayer thickness in both sample types was 30 mils (0.76 mm).

A conventional impact test widely used to test the laminates in the safety glazing industry is the five pound steel ball drop test. This test is defined in American National Standard Z26.1-1983 Section 5.26 Penetration Resistance, Test 26. The purpose of this test is to determine whether the glazing material has satisfactory penetration resistance. For automotive windshields, a minimum performance level is set at eight out of ten samples passing a twelve foot ball drop without the ball penetrating the sample within 5 seconds of the impact. The test method calls for controlling laminate temperature between 77 to 104°F (25 to 40°C). The laminates (separated to provide air circulation) were placed in a controlled temperature oven, a minimum of 2 hours prior to impact. Rather than dropping the five-pound ball from 12 feet, a variety of drop heights were used to assess the "mean" support height (the height at which it is estimated that 50% of the samples would be penetrated).

The laminate formed with the ionomer resin interlayer retains penetration by the steel ball over the range of temperatures tested.

Mean Support Height Using Five Pound Ball

| Interlayer Type | Laminate Temperature | |
|---|---|---|
| | 77°F (25°C) | 104°F (40°C) |
| PVB (30 mil) | 23 (feet) | 13 (feet) |
| Ionomer Resin (30 mil) | 23 (feet) | 24 (feet) |

**Claims**

1. A transparent laminate comprising at least one layer of glass and having self-adhered directly to the layer of glass a thermoplastic polymer layer having low haze; wherein the laminate is capable of sustaining repeated or prolonged stress after the breakage of the glass layer while maintaining the structural integrity of the laminate.

2. The transparent laminate of claim 1 comprising two layers of glass laminated together with a thermoplastic interlayer; wherein the interlayer is directly adhered to the glass layer and has Storage Young's Modulus of 50-1,000 MPa (mega Pascals) at 0.3 Hz and 25°C determined according to ASTM D 5026-95a, a Minimum Tear Energy of at least 15 MJ/m$^3$ (mega Joules per cubic meter) determined at 25°C from tensile tests carried out according to ASTM 638-89 and an adhesion to glass of 5-42 MPa determined at 25°C according to Compressive Shear Strength Test.

3. The transparent laminate of claim 2 in which the interlayer is a sheet of an ionomer resin consisting essentially of an ionomer resin of a water insoluble metallic salt of a polymer of ethylene and methacrylic acid or acrylic acid containing about 14-24% by weight of the acid and about 76-86% by weight of ethylene and having about 10-80% of the acid neutralized with a metallic ion and the ionomer has a melt index of about 0.5-50.

4. The transparent laminate of claim 3 which passes the Hurricane Impact and Cycling Test determined according to South Florida Building Code chapter 23, section 2315 Impact Tests for wind born debris; fatigue load testing according to Table 23-F of section 2314.5, dated 1994.

5. The transparent laminate of claim 3 in which the ionomer resin consists essentially of a water insoluble sodium salt consisting essentially of a polymer of ethylene and methacrylic acid or acrylic acid containing about 18-20% by weight of the acid and having about 30-50% by weight of the acid neutralized sodium ion and the ionomer has a melt index of about 0.5-5.0.

6. The laminate of claim 5 in which the interlayer comprises an ionomer resin of a water insoluble sodium salt of a polymer of ethylene and methacrylic acid containing about 18-20% by weight of methacrylic acid and about 35-40% of the acid being neutralized with sodium ion and the ionomer has a melt index of about 1-3.

7. The transparent laminate of claim 3 in which the ionomer resin consists essentially of a water insoluble sodium salt consisting essentially of a polymer of ethylene and methacrylic acid or acrylic acid containing about 14-17% by weight of the acid and having about 60-70% by weight of the acid neutralized sodium ion and the ionomer has a melt index of about 0.5-5.

8.  The transparent laminate of claim 7 in which the ionomer resin consists of polymer of a water insoluble salt consisting essentially of a polymer of ethylene and methacrylic acid containing about 14-17% by weight of the acid and having about 60-70% by weight of the acid neutralized sodium ion and the ionomer has a melt index of about 1-3.

9.  The laminate of claim 2 having a thickness of about 3-30 mm and an interlayer thickness of about 0.38-4.6 mm.

10. A transparent laminate comprising two layers of glass laminated together with a thermoplastic interlayer self-adhered directly to the glass; wherein the interlayer comprises an ionomer resin of a water insoluble sodium salt of a polymer of ethylene and methacrylic acid containing about 18-20% by weight of methacrylic acid and about 35-40% of the acid being neutralized with sodium ion and the ionomer has a melt index of about 1-3 and is not treated with an amine.

11. In a process for forming the laminate of claim 2 which comprises contacting an interlayer sheet to a glass, de-airing the resulting structure and sealing said sheet and glass plate by applying heat and pressure thereto; the improvement used there in which comprises an interlayer of an ionomer resin consisting essentially of a water insoluble metallic salt of a polymer of ethylene and methacrylic acid or acrylic acid containing about 14-24% by weight of the acid and about 76-86% by weight of ethylene and having about 10-80% of the acid neutralized with metallic ion and the ionomer has a melt index of about 0.5-50.

12. The laminate of claim 1 comprising a second durable transparent layer or coating of a thermoplastic polymer adhered to the ionomer resin layer.

13. An ionomer resin sheet consisting of a water insoluble polymer of a sodium salt of polymerized ethylene and methacrylic acid or acrylic acid containing about 18-20% by weight of the acid and having about 30-50% by weight of the acid neutralized sodium ion and the ionomer has a melt index of about 0.5-5.0.

14. The ionomer resin sheet of claim 13 consisting of a water insoluble sodium salt of polymerized ethylene and methacrylic acid containing about 18-20% by weight of methacrylic acid and about 35-40% of the acid being neutralized with sodium ion and the ionomer has a melt index of about 1-3.

FIG.1

FIG.2

FORCE

10

14

20

18

16

12

FIG.3

| | European Patent Office | EUROPEAN SEARCH REPORT | Application Number EP 06 02 1206 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 344 014 A (WATKIN REES RICHARD) 26 September 1967 (1967-09-26) * column 7, line 34 - column 9, line 20; examples VI,VII; table IV * ----- | 1,3,5-8, 10-14 | INV. B32B17/10 C03C27/12 |
| X | US 4 668 574 A (BOLTON NELSON P [US] ET AL) 26 May 1987 (1987-05-26) | 1,3,11, 12 | ADD. C08L23/08 C08F8/44 |
| A | * column 5, line 19 - line 48; examples 2,5,6 * ----- | 5-8,13, 14 | |
| X | PATENT ABSTRACTS OF JAPAN vol. 097, no. 003, 31 March 1997 (1997-03-31) & JP 08 295541 A (DU PONT MITSUI POLYCHEM CO LTD), 12 November 1996 (1996-11-12) | 1,12 | |
| A | * abstract * ----- | 3,5-8, 10,13,14 | |
| X | EP 0 476 330 A (STANLEY ELECTRIC CO LTD) 25 March 1992 (1992-03-25) | 1,12 | TECHNICAL FIELDS SEARCHED (IPC) |
| A | * page 3, line 11 - page 4, line 17 * ----- | 3,5-10, 13,14 | B32B C03C C08L C08F |
| X | EP 0 785 064 A (SAINT GOBAIN VITRAGE) 23 July 1997 (1997-07-23) | 1,12 | |
| A | * page 2, line 32 - line 54; claims; table 1 * ----- | 3,5-8, 13,14 | |
| A | WO 96/41717 A (IPM IND PLASTICA MONREGALESE S [IT]; FERRERO GIANFRANCO [IT]; BRUNO EN) 27 December 1996 (1996-12-27) * page 4, line 25 - page 5, line 18 * ----- | 1,3,5-8, 10-14 | |

The present search report has been drawn up for all claims

| Place of search | Date of completion of the search | Examiner |
|---|---|---|
| Munich | 8 January 2007 | Lindner, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 02 1206

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2007

| Patent document cited in search report | | Publication date | Patent family member(s) | | Publication date |
|---|---|---|---|---|---|
| US 3344014 | A | 26-09-1967 | DE | 1496628 A1 | 23-10-1969 |
| US 4668574 | A | 26-05-1987 | NONE | | |
| JP 08295541 | A | 12-11-1996 | JP | 3797681 B2 | 19-07-2006 |
| EP 0476330 | A | 25-03-1992 | DE | 69101418 D1 | 21-04-1994 |
| | | | DE | 69101418 T2 | 13-10-1994 |
| | | | JP | 1851559 C | 21-06-1994 |
| | | | JP | 4108641 A | 09-04-1992 |
| | | | JP | 5063421 B | 10-09-1993 |
| EP 0785064 | A | 23-07-1997 | CA | 2170017 A1 | 20-07-1997 |
| | | | DE | 69725195 D1 | 06-11-2003 |
| | | | DE | 69725195 T2 | 17-06-2004 |
| | | | ES | 2208836 T3 | 16-06-2004 |
| | | | FR | 2743802 A1 | 25-07-1997 |
| | | | JP | 9227177 A | 02-09-1997 |
| | | | US | 5895721 A | 20-04-1999 |
| WO 9641717 | A | 27-12-1996 | AU | 6301996 A | 09-01-1997 |
| | | | IT | SV950004 A1 | 13-12-1996 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4297262 A, Phillips
- US 4230771 A, Phillips
- GB 828381 A
- US 4663228 A, Bolton
- US 3404134 A, Rees